# EUROPÄISCHE PATENTSCHRIFT

(11) **EP 2 464 447 B1**
(45) Veröffentlichungstag und Bekanntmachung des Hinweises auf die Patenterteilung: **14.09.2016**
(21) Anmeldenummer: 10755116.0
(22) Anmeldetag: 16.08.2010
(51) Int. Cl.: B01F 3/04, B01F 5/04, B01F 5/10, C02F 9/00, C02F 1/72, C02F 1/76, C02F 1/78

(54) **VORRICHTUNG ZUM EINTRAG VON GAS IN FLÜSSIGKEITEN**
DEVICE FOR ADDING GAS TO FLUIDS
DISPOSITIF D'INTRODUCTION DE GAZ DANS DES LIQUIDES

(30) Priorität: 14.08.2009 DE 102009026376
(43) Veröffentlichungstag der Anmeldung: 20.06.2012
(73) Patentinhaber: Brensing, Karl August, 53179 Bonn (DE); Dedenbach, Michael, 53179 Bonn (DE)
(72) Erfinder: Brensing, Karl August, 53179 Bonn (DE); Dedenbach, Michael, 53179 Bonn (DE)
(74) Vertreter: Fitzner, Ulrich
(86) Internationale Anmeldenummer: PCT/EP2010/061908
(87) Internationale Veröffentlichungsnummer: WO 2011/018529

(56) Entgegenhaltungen:
- WO-A1-02/102723
- WO-A1-2008/130710
- DE-A1- 1 517 440
- DE-A1- 2 556 328
- KR-A- 20030 016 875
- US-A- 2 606 150
- US-A1- 2006 086 669

## Beschreibung

Die vorliegende Erfindung betrifft eine Vorrichtung zum Eintrag von Gas in Flüssigkeiten.

Das Eintragen von Gas ist in vielen Bereichen der Technik von Bedeutung. Insbesondere bei Verfahren zum Kontaktieren von Gasen mit Flüssigkeiten zur Durchführung von Stoff- und Energieaustauschprozessen werden entsprechende Verfahren durchgeführt. Beispielsweise erfolgt der Austauschprozess von Gas und Flüssigkeitsströmen in Packungskolonnen, wobei gewöhnlich Gas und Flüssigkeit im Gegenstrom geführt werden. So fließt die Flüssigkeit an den Wänden einer Kolonne und auf der Oberfläche auf der Packung nach unten und kommt dabei mit dem aufwärts strömenden Gas in Berührung. Eine solche Anlage ist beispielsweise in der DE 32 28 045 A1 beschrieben. Weitere Anlagen, die dem Anreichern von Flüssigkeit mit Gas dienen, sind z. B. aus der der DE 32 20 451 A1, der DE 37 37 424 A1, der DE 102 46 452 A1, DE 103 40 024 B3, der EP 0394 629 A1, der EP 1405 829 A1, der EP 1491 495 A1 und der WO02/102723 A1 bekannt.

Ein wichtiges Anwendungsgebiet für das Einbringen von Gasen in Flüssigkeiten ist die Desinfektion und die Sanitisierung von Behältern und Leitungssystemen. Hierbei wird das Gas in Form von Oxidationsmitteln eingebracht.

Insbesondere in Systemen, die mit Flüssigkeiten, beispielsweise Wasser beaufschlagt werden, können sich hygienisch bedenkliche Zustände bilden. Zum Beispiel können an Leitungswänden Biofilme entstehen. Hierbei handelt es sich um Lebensgemeinschaften, die mikrobielles Leben eingebettet in einer Matrix aus extrazellulären polymeren Substanzen ermöglichen. Die extrazellulären polymeren Substanzen dienen unter anderem dem äußeren Schutz vor pH-Schwankungen, Salzen, hydraulischer Belastung, toxischen Schwermetallen, Antibiotika und Immunabwehrmechanismen. Die Matrixstruktur führt zu enorm hoher Widerstandsfähigkeit der betreffenden Lebensformen, die aus diesen Gründen teilweise bis tausendfach resistenter gegenüber antimikrobiellen Wirkstoffen sind, als die Einzelorganismen (Gilbert, P., Das, J. und Foley, I. (1997) Biofilmes susceptibility to anti microbiles Adv Dent Res 11(1): 160-167; Costerton, J.W. Stuart, P.S. und Bönberg, E.P. (1999) Bacterial biofilmes a common cause of persistent infections, science 284: 1318-1322).

Studien haben gezeigt, dass ein großer Anteil von Infektionen durch solche Biofilme verursacht wird und diese insbesondere in Krankenhäusern lebensbedrohliche Auswirkungen haben können (Lasa, I., Del Pozo, J.L., Penades, J.R., Leiva, J. (2005) bacterial biofilmes and infection, An. Sist. Sanit. Navar. 28: 163-175). Zu den problematischen Biofilmbakterien zählen insbesondere Pseudomonas aeroginosa, Legionella pneumophila, Acinetobacter, atypische Mykobakterien sowie Serratia. Insbesondere die Pseudomonas-aeroginosa-Infektionen sind auf kontaminiertes Leitungswasser zurückzuführen (Reuter, S., Sigge, A., Reuter, U. u.a. (2002) Endemische Übertragungswege von Pseudomonas aeroginosa, Hyg Mikrobiol 6: 6-12). Daher stellen solche Infektionen insbesondere auf Intensivstationen, Dialysezentren oder operativen Abteilungen ein erhebliches Problem dar.

Ganz besonders bei Dialysen ist die Bildung von Biofilmen ein erhebliches Gefahrenpotenzial. Denn bestimmte Elemente der Wasseraufbereitungsanlagen von Dialyseeinrichtungen, zum Beispiel Filter, Ionenaustauscher oder Membranen fördern die Entwicklung solcher Biofilme. Zusätzliche Faktoren, die die Vermehrung von Bakterien begünstigen sind z. B. Toträume in Wasserleitungssystemen, geringe oder keine Fließgeschwindigkeiten und der Einsatz von Bikarbonatkonzentrat, das zur Herstellung der Dialysierflüssigkeiten verwendet wird.

Zu den geeigneten Desinfektionsmitteln zählt unter anderem Ozon. Dieses Gas hat beispielsweise in der Lebensmittelindustrie, in der Trink- und Abwasseraufbereitung sowie der zahnmedizinischen Behandlung Verwendung gefunden. Entsprechende Anlagen zum Einsatz von Ozon sind beispielsweise in der DE 10061890 A1, DE 1016365 A1, DE 29806719 U1, DE 3225674 A1, DE 202008001211 U1 und der EP 0577475 A1 beschrieben. Ozonisierungsanlagen in verschiedenen Ausgestaltungen sind u.a. aus der US 4,252,654 A, der CH 365342 A, der DE 3737424 A1, der DE 3830909 A1 und der US 2006/0237557 bekannt.

Weniger Einsatz hat Ozon in Dialyseeinrichtungen gefunden. Gleichwohl ist aus Brensing u.a. Hyg Med 2009, 34 bekannt, welche mikrobiologischen Vorteile eine tägliche Ozonierung der Ringleitungssysteme von Dialyseeinrichtungen mit sich bringt. Eine verfahrens-technische und gerätetechnische Lösung wird in diesem Stand der Technik aber nicht vorgestellt. Daher wären Lösungen für den Einsatz von Ozon insbesondere im Dialysebereich äußerst notwendig. Denn die üblicherweise für die Ringleitungssysteme verwendeten Materialien sind nicht thermostabil. Zwar sind PVC-Oberflächen von Vorteil für die Verzögerung der Entstehung von Biofilmen, aber Infolge der mangelnden thermischen Stabilität eine Hitzedesinfektion für Dialyseeinrichtungen nicht geeignet. Sofern thermostabile Leitungen Verwendung finden, sind die Desinfektionsverfahren sehr wasserintensiv und energieaufwendig. Ein weiteres Problem ergibt sich bei Notdialysen, welche innerhalb von kurzer Zeit durchzuführen sind. Denn bei der Hitzedesinfektion können Abkühlzeiten von 2 bis 3 Stunden notwendig sein, ehe sicher eine Dialyse erfolgen kann.

Auf der anderen Seite sind chemische Desinfektionen zeitaufwendig, teuer und verlangen einen erheblichen Aufwand bezüglich der Überprüfung der Rückstandsfreiheit der Chemikalien. Hinzu kommt, dass die Chemikalien auf Biofilme nicht ausreichend wirken.

Die vorliegende Erfindung hat sich die Aufgabe gestellt, eine Vorrichtung zum Eintrag von Gas in Flüssigkeiten zur Verfügung zu stellen, welche kompakt ist und vielseitig eingesetzt werden kann. Im Gegensatz zum derzeitigen Stand der Technik, wird dabei nach dem Venturioprinzip arbeitenden Injektoren verzichtet.

Dadurch arbeitet die Erfindung unabhängig von Strömungs- und Druckschwankungen. Dieses verfahren kann auch als aktiver Konzentrator bezeichnet werden. Insbesondere soll die Vorrichtung in Desinfektions- und Sanitisierungsverfahren Verwendung finden können, besonders auch in thermoinstabilen Systemen. Vor allem im Bereich der Medizin, ganz besonders im Bereich der Dialysevorrichtungen, soll das Gerät zum Einsatz kommen.

Die Einleitung des gasförmigen Oxidationsmittels kann vorzugsweise durch eine Vorrichtung zum Eintrag von Gas in Flüssigkeiten gemäss dem Anspruch 1 erreicht werden.

Die Vorrichtung zum Eintrag von Gas in Flüssigkeit kann im Gegenstrom oder Gleichstrom betrieben werden. D.h., Gas und Flüssigkeit können von derselben Seite in das Strömungsrohr eingeführt werden, oder auch im Gegenstrom zueinander eingebracht werden.
Die Rückführung der Teilmenge des Gasflüssigkeitsgemischs enthält Zufuhrmodule zur Anreicherung mit gasförmigen Oxidationsmittel, z.B. Ozon.

Die Zuführmodule dienen als Eintragssysteme und bestehen aus einer zylindrischen Bohrung in der Ausgestaltung eines spitz zulaufenden Kegels. An den Kegel, insbesondere der Kegelspitze, schließt sich der beginn der Rückführleitung an, der in seiner Dimensionierung so gewählt ist, dass durch Erhöhung der Strömungsgeschwindigkeit im Inneren der zylindrischen Bohrung ein Wirbel entsteht. Dieser Wirbel zerkleinert die eintretenden Blasen (Makroblasen werden zu Mikroblasen). Bei Verwendung einer elektrolytischen Ozonzelle beschleunigt die Wirbelbildung ein Abreißen der Blasen am Erzeuger.
Der Kegelmantel neigt erfindungsgemäß vorzugsweise eine Neigung in einem Winkel von 10° bis 80°, besonders bevorzugt von 45° bis 60° im Verhältnis zur senkrecht vertikal ausgerichteten Wand der Kammer. Der Durchmesser des anschließenden Kanals zur Rückführleitung beträgt vorzugsweise 1 bis 12 mm, besonders bevorzugt 2 bis 9 mm. Bevorzugt ist eine Ausgestaltung, bei welcher der Durchmesser des Rückführkanals 10 bis 40%, vorzugsweise 15 bis 30 % der Zylinderbohrung der Kammer Durchmessers darstellt.

Mittels einer nachgeschalteten Verdrängerpumpe, z.B. einer Zahnradpumpe, kann für einen weiteren Eintragsschritt gesorgt werden. Durch die weitere Reduzierung der Blasengröße und durch die partielle Erhöhung des Drucks wird das Oxidationsmittel, vorzugsweise Ozon dann bestmöglich im Wasser gelöst. Die Verdrängerpumpe wird der zylindrischen Bohrung so nachgeschaltet, dass das System saugend arbeitet. Dadurch ist ein strömungs- und lageunabhängiger Betrieb des Eintragssystems möglich und das Rezirkulationsvolumen in das Strömungsrohr kann somit variabel zum Durchströmungsvolumen der anzureichernden Flüssigkeit gesteuert werden.

Es können beliebig viele dieser Module hintereinander geschaltet werden. Die Zahl der Module ist geeignet, die Menge des eingebrachten Gases für die jeweilige Anwendung zu optimieren. Durch die wiederholte Rückführung kommt es zu einer optimalen Ausnutzung und Konzentrierung des zugeführten Gases in die Flüssigkeit.

In einer Variante ist es möglich, dass Verfahren nach einem der vorhergehenden Ansprüche dadurch gekennzeichnet, dass Gas und Flüssigkeit in dem Strömungsrohr auch aus mehreren parallel geschalteten Gaseintragungsmodulen erfolgen kann. D. h., es sind beliebige Kombinationen für Gleich- und Gegenstromschaltungen denkbar. Z. B. kann ein Gerät im Gleichstrom und mehrere andere können im Gegenstrom geführt werden.

Das Eintragssystem arbeitet mithin als Konzentrator. Dieser hat die Aufgabe, die Konzentration an Oxidationsmittel, z.B. Ozon im Wasser zu erhöhen. Das mit gasförmigen Oxidationsmittel angereicherte Wasser wird hierbei wiederholt über das Eintragssystem geleitet. Das Wasser wird dadurch erneut mit dem Oxidationsmittel angereichert. Als Reaktor dient dabei ein Hohlraum, der in den Block eingearbeitet oder einzeln ausgeführt ist. Der Konzentrator kann dabei im Gleichstrom- oder im Gegenstromprinzip - wie oben bereits erwähnt - gefahren werden. Die zum Betrieb benötigten Reaktionsräume bzw. Hohlräume können z.B. als Bohrungen in einem Block oder diskret aufgebaut werden. Das Eintragsystem und die nachgeschalteten Flüssigkeitssysteme können ggf. neben den beschriebenen Einrichtungen u. a. auch Entgasungsvorrichtungen enthalten. Hier kann überschüssiges Oxidationsmittel, z.B. das Ozon, ab- oder rückgeführt werden.

Die erfindungsgemäße Vorrichtung ist in beliebigen Systemen einsetzbar. Sie kann für eine Durchfluss-Gasanreicherung verwendet werden. Hierbei ist es möglich, dass eine Anreicherung von Ozon in Flüssigkeiten als Durchflussozonisierung durchgeführt wird.
Ebenso ist aber auch ein Verfahren im Batch-Betrieb möglich, d.h. dass die Ozonisierung von Flüssigkeiten im Batch-Betrieb durchgeführt wird, wobei aus einem Arbeitsbehälter Volumen entnommen wird und durch wiederholte Kreislaufführung über das erfindungsgemäße Strömungsrohr bzw. Eintragsystem eine schrittweise Ozonisierung einer Flüssigkeit erreicht wird. Hier wird in der Regel mit Ozonkonzentrationen ab ca. 20 ppb und um ein vielfaches mehr gearbeitet.

Ein Vorteil der erfindungsgemäßen Anlage ist, dass auch unter Überdruck gearbeitet werden kann. Typischerweise wird in Dialyseeinrichtungen bis 6 bar Betriebsdruck gearbeitet. Vorzugsweise ist die Anlage für Drücke von 0 - 15 bar, besonders bevorzugt für Drücke von 0 - 8 bar ausgelegt. Höhere Drücke sind jedoch konstruktiv mit dem Gaseintragsystem auch möglich.

Die erfindungsgemäße Vorrichtung eignet sich insbesondere für Verfahren zur Sanitisierung und Desinfizierung. D.h., es können vorzugsweise gasförmige Oxydationsmittel in der Vorrichtung angereichert werden, und zur Desinfektion und Sanitisierung eingesetzt werden. Besonders bevorzugtes Oxydationsmittel sind Ozon In Betracht kommen können aber auch weitere oxidierende Desinfektionsmittel wie:
Natriumhypochlorit, Calciumhypochlorit, Chlor, elektrolytisch hergestellte Chlorverbindungen, Chlordioxidlösungen, Wasserstoffperoxid, auf Basis von Peressigsäure.

Ozon bietet gegenüber anderen Oxidationsmitteln und gegenüber herkömmlichen Desinfektionsmitteln eine Reihe von Vorteilen. Insbesondere wird der Biofilm sicher abgebaut bzw. die Keimzahl signifikant reduziert und es bleiben keine chemischen Rückstände zurück; denn Ozon zerfällt in Sauerstoff. Ferner wird die Neubildung eines Biofilms unterdrückt. Außerdem werden nur geringste Konzentrationen gebraucht. Schließlich ermöglicht der Einsatz des Ozons, ohne Hitze zu arbeiten. Es kann somit eine effektive Kaltdesinfektion und -sanitisierung durchgeführt werden.

Erfindungsgemäß besonders bevorzugt ist es jedoch, dass Ozon in einer speziellen Erzeugungseinrichtung direkt in der Anlage herzustellen. Hierfür kommen alle dem Fachmann bekannten Methoden in Betracht.

Grundsätzlich kann das Ozon aus Sauerstoff unter Hinzufügung von Energie mittels sog. stiller elektrischer Entladungen hergestellt werden.

Die Ozonbildung findet hierbei durch Rekombination eines Sauerstoffmoleküls mit einem Sauerstoffatom statt. Es muss also eine Spaltung eines Sauerstoffmoleküls durch elektrische Energie erfolgen. Dies wird in einem Gasraum zwischen zwei Elektroden erreicht, die durch ein Dielektrikum getrennt sind. An den Elektroden werden Wechselstrom und ein Hochspannungsfeld angelegt. Meistens sind die Ozonerzeugungseinheiten als Glas- oder Keramikröhren in Edelstahlröhren positioniert, so dass ein möglichst enger ringförmiger Entladungsspalt entsteht. Eine entsprechende Anzahl dieser Ozonerzeugungsmodule kann dann für die Produktion von Ozonmengen von wenigen Gramm/Stunde bis vielen Kilogramm/Stunde verwendet werden. Als Betriebsgas werden entweder Sauerstoff oder Luft eingesetzt.

Ebenso ist aber auch möglich, unter Einsatz von UV-Licht aus dem Betriebsgas (Sauerstoff oder Luft) Ozon zu erzeugen, d.h. die elektrische Spaltung von Sauerstoff kann auch durch Strahlungsenergie erfolgen. Hierfür verwendet man vorzugsweise UV-Lampen mit Strahlungswellenlängen von etwa 185 nm. Bei dieser Wellenlänge absorbiert molekularer Sauerstoff Energie und wird in Atome gespalten. Die Rekombination der Atome führt dann zum Ozonmolekül. Die UV-Ozon-Erzeuger bestehen gewöhnlich aus einem Bestrahlungsreaktor mit eingebauter Lampe, an der das sauerstoffhaltige Betriebsgas vorbeiströmt und in Ozon umgewandelt wird. Diese Geräte sind vorzugsweise für kleine Ozonmengen von wenigen Gramm/Stunde einsetzbar.

Eine Alternative ist die Herstellung aus Flüssigkeit, die Sauerstoff enthält, insbesondere aus Wasser. Hier wird unter Einsatz von Energie, zum Beispiel elektrischer Energie, das Ozon hergestellt. Hierbei wird mittels einer elektrolytischen Wasserspaltung Ozon aus dem Sauerstoff des Wassermoleküls erzeugt (DE000004222732C2, EP0000000068522A1). In einer Durchflusszelle befinden sich spezielle Elektroden (z.B. Anode mit Feststoffelektrolyt und Kathode) die vom Wasser umströmt werden. Eine Gleichspannungsquelle erzeugt den erforderlichen Elektrolysestrom, der zur Ozon-Gas-Erzeugung an der Anode führt. Das betreffende Verfahren ist in erster Linie für kleine Ozonmengen von wenigen Gramm/Stunde einsetzbar. Bei der Verwendung von elektrolytischen Ozonerzeugern in VE-Wasser ist nach dem Abschalten der Spannung eine geeignete Schutzspannung anzulegen, damit die Elektroden der Zelle nicht beschädigt werden.

Die beschriebene Anlage weist gegenüber dem Stand der Technik erhebliche Vorteile auf. Sie ist als kompakte Zentraleinheit für jede Anlage anpassbar und für eine Kaltdesinfektion und -penetration anwendbar. Durch den Kompakten Aufbau mit den äußeren Maßen von 35-45 x 45-65 x 70-90 cm, vorzugsweise von 38-42 x 48-60 x 75-85 cm, besonders bevorzugt von 40x50x80cm ist dieses System für den Mobilen Einsatz besonders geeignet. Besonders hervorzuheben ist der Aufbau, ein geschlossenes System das über keinen Behälter oder Tank eine Verbindung zur Atmosphäre hat. Diese Konstruktion umgeht die nachteile des Venturiosystems das bei Druckänderungen oder Flussunterbrechungen zusammenbricht. Das System ermöglicht unter
Einbeziehung geeigneter Kupplungen und Ventile eine totraumfreie Komplettdesinfektion und Sanitisierung mittels dezentraler Stichleitungsperfusion ohne aktive Endverbraucher. Die regelmäßige Desinfektion ist hoch effektiv und kostengünstig, da kein Ring- oder Übergabe-Modul Umbau nötig ist und nahezu keine oder nur geringe Folgekosten im Vergleich zur Heißdesinfektion entstehen. Ferner wird die Biofilmbildung völlig bzw. weitgehend verhindert und es bleiben keine chemischen Rückstände zurück. Das Ozon zerfällt zu ungiftigem Sauerstoff. Andererseits sind schon geringste Ozonkonzentrationen mikrobiologisch sehr effektiv.

Das erfindungsgemäße Gerät kann auch unter anderem wegen seiner kompakten Bauform zur periodischen Desinfektion von Wasseraufbereitungssystemen wie Ionenaustauschern zur Enthärtung und Umkehrosmosen eingesetzt werden. Außerhalb der Dialyse kann es in weiteren Bereichen der Medizin- und Labortechnik ebenso wie in Trinkwasseraufbereitung und der Konservierung von Flüssigkeiten Verwendung finden. Ebenso ist ein Einsatz bei Laborwasserversorgungen, in Krankenhäuser und Pflegeeinrichtungen, in der Getränke- und Getränke-Automatentechnk denkbar. Weitere Anwendungsgebiete umfassen die Fisch- und Nutztierhaltung sowie die Warmwasser-, Heiz- und Klimatechnik z.B. in Hotels, Sauna, Wellness und Schwimmbädern. Möglich sind auch Anwendungen in der Prozeß- und Abwasserbehandlung.

Im Folgenden wird die Erfindung unter Bezugnahme auf die Figuren näher beschrieben.
- Figur 1: stellt die erfindungsgemäße Vorrichtung im Gegenstrombetrieb dar.
- Figur 2: stellt die erfindungsgemäße Vorrichtung als Gleichstromvariante dar.
- Figur 3: zeigt den Einsatz der erfindungsgemäßen Vorrichtung am Beispiel einer Dialysedesinfektionsanlage dar.
- Figur 4: stellt ein Beispiel eines Batchbetriebes dar.
- Figur 5: stellt ein Beispiel in einem Getränkeautomaten dar

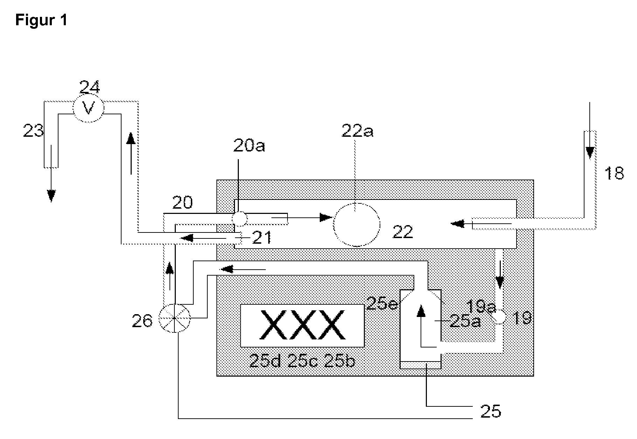

In dem Beispiel gemäß Figur 1 ist das erfindungsgemäße Ozonerzeugungs- und Eintragsystem im Detail dargestellt. Danach wird über die Leitung 18 zu ozonisierendes Wasser eingeführt. Über die Leitung 19 erfolgt das Ansaugen von Flüssigkeit zur Ozoneinbringung in die Kammer 25 a mittels einer Verdrängerpumpe 26 und Rückführung über die Rückführleitung 20 in das Strömungsrohr 22. Die Kammern 25 a, b, c und d sind mit einer Ozoneinbringung Zufuhrleitung 25 versehen. Die Rückführleitung 20 endet in dem Strömungsrohr 22 mit dem Ausfluss 21. Das angereicherte Ozon-Flüssigkeitsgemisch verlässt das Strömungsrohr 22 über den Abfluss 23. Bei Bedarf kann das Ventil 24 so geschaltet werden, dass der Flüssigkeitsstrom von 18 nach 23 gedrosselt wird und bzw. gestoppt wird zunächst das Flüssigkeitsgasgemisch im Kreislauf mittels Pumpe 26 geführt wird, bis eine optimale Anreicherung erfolgt ist. In der Ozonisierungskammer 25 a ist eine kegelförmige Düse 25 e zum Einführen von Ozon in die angesaugte Flüssigkeit angeordnet. Bei Bedarf können noch weitere Kammern 25b, 25c und 25d angeordnet sein. In den Leitungen 19, 20 oder 22 können Fluss-, Temperatur- und Gasblasen-, Mess-, Steuer- und Regeleinrichtungen 19a, 20a, 22a angeordnet sein. Die Leitungen 18 und 20 führen Flüssigkeit und Ozon im Gegenstrom in das Strömungsrohr 22 ein.

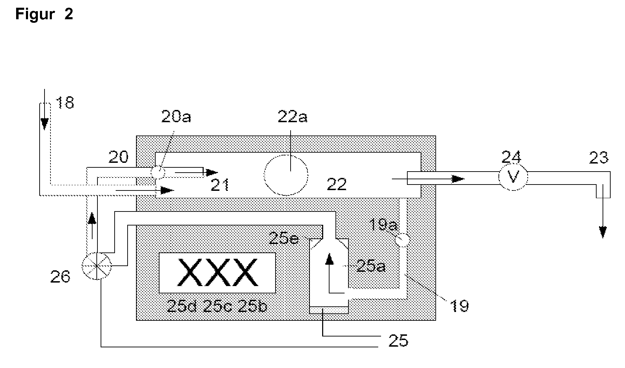

In dem Beispiel gemäß Figur 2 haben sämtliche Teile dieselbe Funktion wie in Figur 1. Einziger Unterschied ist, dass die Leitungen 18 und 20 führen die anzureichernde Flüssigkeit 18 und Ozon bzw. das Gasgemisch im Gleichstrom in das Strömungsrohr 22 geführt sind.

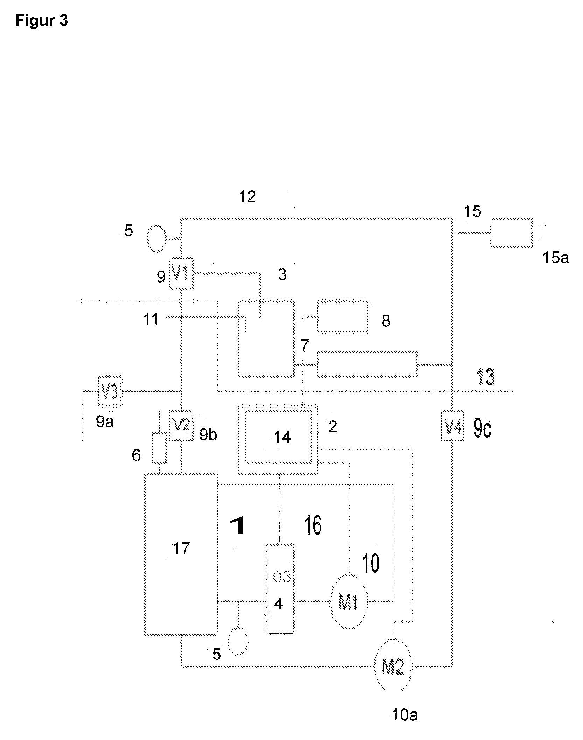

Die Figur 3 stellt die Einbindung der Erfindung gemäß Figur 1 oder 2 am Beispiel einer Desinfektion einer Ringleitung mit angeschlossenen Endverbraucher (15a) einer Dialyseeinrichtung dar. Der Endverbraucher 15a ist über die Stichleitung 15 mit dem Rücklauf der Ringleitung 12 verbunden. Über die Start-Stopp-Eingabe kann die Umkehrosmosesteuerung 8 ein- oder ausgeschaltet werden. Das aus dem Ozonerzeugungs- und Eintragssystem 4 kommende Ozon- /Wassergemisch wird in den Arbeitsbehälter 17 gegeben. Der Ozonerzeuger ist saugseitig der Kreislaufpumpe 10 vorgeschaltet. Die Steuerung erfolgt mittels der Vorrichtung 2, welche in dem Beispiel einen Touchscreen 14 aufweist. Die Ozonkonzentration kann über die Vorrichtung 5 im inneren Kreislauf 1 und im äusseren Kreislauf 3 gemessen werden. Durch die Kreislaufpumpe 10 wird das Ozon im inneren Kreislauf 1 geführt und das Wasser mit Ozon angereichert. Hierdurch wird der Arbeitsbehälter 17 einer Desinfektion unterworfen. Das überschüssige Ozon wird über die Entgasungseinrichtung 6 abgeführt.

Bei der inneren Desinfektion wird die Ozonkonzentration von mindestens 30 ppb im Arbeitslaufbehälter 17 für circa 10 bis 15 Minuten konstant gehalten. Nachdem die Desinfektion im inneren Kreislauf 1 abgeschlossen ist, kann der äußere Kreislauf 3 angekoppelt werden und mittels Druckerhöhungspumpen 10a betrieben werden. Es handelt sich hier um die Dialyseringleitungen 12, sowie den über die Stichleitung(en) 15 angekoppelten Endverbraucher 15a.
Nach dem Erreichen einer parametrierbaren Ozonkonzentration, mindestens 30 ppb, beginnt die einstellbare Reaktionszeit. Die Ozonkonzentration im äusseren Kreislauf 3 und im inneren Kreislauf 1 wird dabei über die Ozonmesseinrichtung 5 gemessen und protokolliert.

Nach Beendigung der Desinfektion wird das System mit dem Permeat der Umkehrosmose über das Kanalventil 9a ausgespült. Dabei wird die Ozonkonzentration im Rücklauf der Ringleitung 12 gemessen. Nach einer einstellbaren Spülzeit bei der die Leitung mit einem Vielfachen ihres Inhalts ausgespült wurde und die Ozonkonzentration in der Ringleitung 12 (Rücklauf) kleiner 10 ppb liegt wird die Spülung beendet und die Anlage wieder für die Dialyse freigegeben..
Im Falle einer Notdialyse bricht die Desinfektion ab und die Anlage wird wie beschrieben gespült. Dadurch steht die Ringleitung in der Regel spätestens nach 30 Minuten dem Dialysebetrieb wieder zur Verfügung.

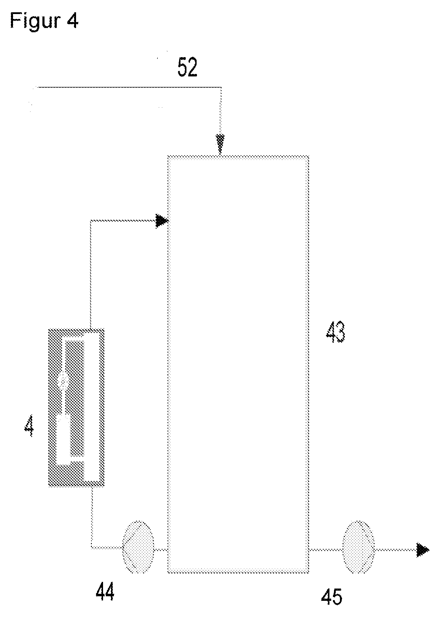

Die Figur 4 stellt die Einbindung der Erfindung gemäß Figur 1 und Figur 2 am Beispiel einer Aufkonzentrierung eines Batchbehälters 43 nach Befüllung über die Zuleitung 42 dar. Hierbei wird Medium aus dem Batchbehälter 43 mittels einer Pumpe 52 über die Ozonerzeugungs- und Eintragsvorrichtung 4 zirkuliert bis im Batchbehälter 43 die gewünschte Konzentration erreicht ist. Das so mit Ozon angereicherte Medium wird dann bei Bedarf mittels der Pumpe 45 zum Verbraucher bzw. zur weiteren Verwendung gepumpt.

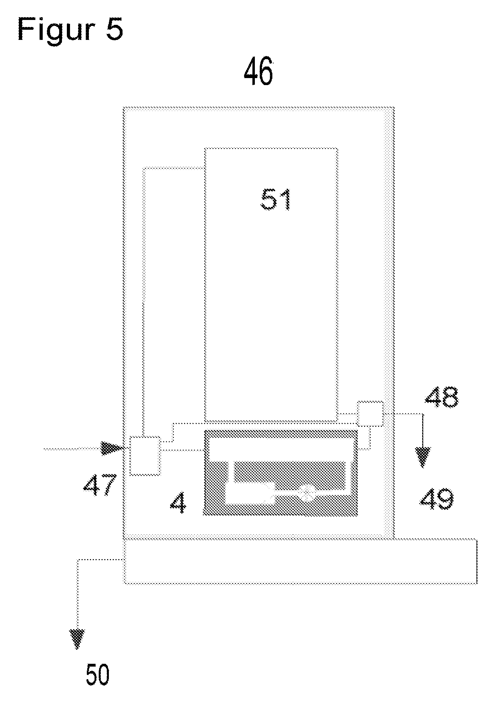

Die Figur 5 stellt die Einbindung gemäß Figur 1 oder 2 am Beispiel einer Getränkemaschine 46 dar. Über Ventilblock 1 (47) erfolgt die Befüllung der Getränkeaufbereitungseinheit 51. Über den Ventilblock 2 (Dreiwegeventil 48) erfolgt nach Bedarf gesteuert die Zufuhr zu der Ozonerzeugungs- und Eintragungseinheit 4 oder zu der Entnahmestelle 49 der Getränkemaschine 46. Über den Ablauf 50 kann die Getränkemaschine entleert werden.

### Bezugszeichenliste

- 1: Innerer Kreislauf
- 2: Steuervorrichtung
- 3: Äußerer Kreislauf
- 4: Ozonerzeugungs-und eintragsvorrichtung (Aktiver Konzentrator)
- 5: Ozonmessvorrichtung
- 6: Entgasungseinrichtung
- 7: Verbindungsleitung zur Umkehrosmosesteuerung
- 8: Umkehrosmosesteuerung
- 9: Umschaltventil Dialysering / Desinfektionen
- 9a: Kanalventil
- 9b: Befüllventil
- 10: Kreislaufpumpe (innerer Kreislauf)
- 10a: Druckerhöhungspumpe (äußerer Kreislauf)
- 11: Weichwassernachspeisung für Umkehrosmose
- 12: Rücklauf
- 13: Vorlauf
- 14: Touchscreen
- 15: Stichleitung(en)
- 15a: Endverbraucher
- 16: Anbindung Ozonerzeugungsvorrichtung 4 an Steuerung 2
- 17: Arbeitsbehälter
- 18: Leitung für zu ozonisierendes Wasser
- 19: Leitung für das Ansaugen von Flüssigkeit zum Ozoneintrag
- 19a: Fluss-, Temperatur-, Gasblasen-Steuer-und Regeleinrichtung
- 20: Rückführleitung
- 20a: Fluss-, Temperatur-, Gasblasen-Steuer-und Regeleinrichtung
- 21: Ausfluss
- 22: Strömungsrohr
- 22a: Fluss-, Temperatur-, Gasblasen-Steuer-und Regeleinrichtung
- 23: Abfluss
- 24: Ventil
- 25: Ozonzufuhr
- 25 a, 25 b, 25 c,25 d: Ozonisierungskammern
- 25 e: Kegelförmige Düse
- 26: Pumpe
- 27: Abgezweigte Leitung
- 28: Drosselventil
- 29: Anschlussstück an Endverbraucher mit internem Ventil
- 30: Leitungsanfang der Leitung 30 a
- 30a: Leitung zum Endverbraucher
- 31: Ventil
- 32: Ozontechnologie
- 33: Venturidüse
- 34: Ankopplungseinheit an Ozontechnologie
- 35: Endverbraucher (zB. HD-Gerät, Dialysator-Spülgerät, Mischtank zur Konzentratherstellung, Sterilisator)
- 36: Ringleitung
- 37: Standardabfluss
- 38: Abflussleitung
- 39: Abfluss aus dem HD-Gerät
- 40: Anschlussleitung Paralellbetrieb und Zufuhr des Desinfektionsmittels als Gas/Flüssigkeitsgemisch
- 41: Anschlusspult für Endverbraucher
- 42: Ankopplungs- und Umschalteinheit
- 43: Batchbehälter
- 44: Zirkulationspumpe
- 45: Produktionspumpe
- 46: Getränkemaschine
- 47: Ventilblock 1
- 48: Ventilblock 2
- 49: Entnahmestelle
- 50: Ablauf
- 51: Getränkeaufbereitungseinheit
- 52: Zulauf
- 53: Auffangbehälter

## Patentansprüche

1. Vorrichtung zum Eintrag von Gas in Flüssigkeiten, welche auf die Verwendung eines nach dem Venturioprinzip arbeitenden Injektors verzichtet umfassend:
- ein Strömungsrohr (22), welches eine Zuführleitung (18) für die zu begasende Flüssigkeit
und wenigstens eine Abflussleitung (23) für das Gas-/Flüssigkeitsgemisch aufweist;
- eine Kammer (25a, 25b, 25c, 25d); eine Leitung (19) und eine saugend arbeitende Verdrängerpumpe (26) um eine Teilmenge des Gas-/Flüssigkeitgemischs aus dem Strömungsrohr (22) über die Leitung (19) in die Kammer (25a, 25b, 25c, 25d) mittels der Verdrängerpumpe (26) zu führen;
- eine Rückführleitung (20) um das Gas-/Flüssigkeitgemisch aus den Kammer (25a, 25b, 25c, 25d) und mittels der Verdrängerpumpe (26) unter Druck in das Strömungsrohr (22) einzubringen, wobei die Rückführleitung (20) mit einem Ausfluss (21) in dem Strömungsrohr (22) endet;
- eine Zuführleitung (25) für das einzubringende Gas, mit der die Kammer (25a, 25b, 25c, 25d) versehen ist;
- und ein Ventil (24), das so geschaltet werden kann, dass der Flüssigkeitsstrom von der Zuführleitung (18) für die zu begasende Flüssigkeit in die Abflussleitung (23) für das Gas-/Flüssigkeitsgemisch gedrosselt bzw. gestoppt wird, und das Gas-/Flüssigkeitsgemisch mittels der Verdrängerpumpe (26) im Kreislauf geführt wird, bis eine optimale Anreicherung erfolgt ist;
wobei die Kammer (25a, 25b, 25c, 25d) aus einer zylindrischen Bohrung in der Ausgestaltung eines spitzzulaufenden Kegels (25e) besteht, und wobei sich an den Kegel (25e) der Beginn der Rückführleitung (20) anschtießt, die in ihre Dimensionierung so gewählt ist, dass durch Erhöhung der Strömungsgeschwindigkeit im Inneren der zylindrischen Bohrung ein Wirbel zur Zerkleinerung von Blasen entsteht.

2. Vorrichtung nach Anspruch 1 **dadurch gekennzeichnet, dass** die Zuführleitung für die zu begasende Flüssigkeit (18) und die Rückführleitung (20) für den Gegenstrombetrieb angeordnet sind.

3. Vorrichtung nach Anspruch 1 **dadurch gekennzeichnet, dass** die Zuführleitung für die zu begasende Flüssigkeit (18) und die Rückführleitung (20) für den Gleichstrombetrieb angeordnet sind.

4. Vorrichtung nach einem der vorhergehenden Ansprüche **dadurch gekennzeichnet, dass** es sich bei der Gaszufuhreinrichtung (25) um eine Einrichtung zur Zufuhr von Ozon handelt.

5. Vorrichtung nach einem der vorhergehenden Ansprüche **dadurch gekennzeichnet, dass** die Neigung der Kegelwand zwischen 10° und 80° im Verhältnis zur senkrecht vertikal ausgerichteten Wand der Kammer (25a, 25b, 25c, 25d) liegt.

6. Vorrichtung nach einem der vorhergehenden Ansprüche **dadurch gekennzeichnet, dass** die Kammer (25a, 25b, 25c, 25d) (20) in ihrem Durchmesser gegenüber der Rückführleitung (20) um 10 bis 40 % vergrößert ist.

7. Vorrichtung nach einem der vorhergehenden Ansprüche **dadurch gekennzeichnet, dass** sie für Drücke von 0 - 15 bar ausgelegt ist.

## Claims

1. An apparatus for introducing gas into liquids, which does not use an injector operating on the Venturi principle, comprising:
- a flow tube (22) which has a feed line (18) for the liquid to be fumigated and at least one outflow line (23) for the gas/liquid mixture,
- a chamber (25a,25b,25c,25d); a line (19) and a displacement pump (26) operating in a sucking manner to introduce a partial amount of the gas/liquid mixture from the flow tube (22) via the line (19) into the chamber (25a,25b,25c,25d) via the displacement pump (26).
- a return line (20) to feed the gas/liquid mixture from the chamber (25a,25b,25c,25d) via the displacement pump(26) under pressure into the flow tube (22),wherein the return line (20) ends in the flow tube (22) with a drain (21);
- a feed line (25) for the gas to be introduced, with which the chamber (25a,25b,25c,25d) is provided;
- and a valve (24) which can be switched such that the liquid stream from the feed line (18) for the liquid to be fumigated, into the outflow line (23) for the gas/liquid mixture is throttled or stopped, and the gas/liquid mixture is led into the circulation via the displacement pump (26) until an optimal enrichment is reached,
wherein the chamber (25a,25b,25c,25d) consists of a cylindrical bore in the configuration of a pointed cone (25e), and wherein at the cone (25e), the beginning of the return line (20) is adjoined which is chosen in its dimension such that a vortex for reducing the size of bubbles is produced by increasing the flow rate inside the cylindric bore.

2. The apparatus as claimed in claim 1, **characterized in that** the feed line for the liquid to be fumitgated (18) and the return line (20) are arranged for counter-current operation.

3. The apparatus as claimed in claim 1, **characterized in that** the feed line for the liquid to be fumigated (18) and the return line (20) are arranged for co-current operation.

4. The apparatus as claimed in one of the preceding claims, **characterized in that** the gas supply device (25) is a device for the supply of ozone.

5. The apparatus as claimed in one of the preceding claims, **characterized in that** the inclination of the cone wall is between 10° and 80° in comparison to the wall of the chamber (25a,25 b,25 c,25 d) which is vertically adjusted.

6. The apparatus as claimed in one of the preceding claims, **characterized in that** the chamber (25a, 25b, 25c, 25d) is increased in its diameter in comparison to the return line (20) by 10 to 40%.

7. The apparatus as claimed in one of the preceding claims, **characterized in that** it is designed for pressures of 0 - 15 bar.

## Revendications

1. Un dispositif d'entrée de gaz dans des liquides, que n'utilise pas un injecteur fonctionnant du principe Venturi, comprenant:
- un tuyau de courant (22) qui comporte un tuyau d'alimentation (18) pour le liquide à etre gazé et qui comporte au moins une conduite d'écoulement (23) pour le mélange de gaz/liquide,
- une chambre (25a,25b,25c,25d); une conduite (19) et une pompe de déplacement (26) opérant dans une manière aspirante pour introduire un sous-ensemble du mélange de gaz/liquide du tuyau courant (22) par la conduite (19) dans la chambre (25a,25b,25c,25d) par la pompe de déplacement (26).
- un tuyau de reconduite (20) pour introduire le mélange de gaz/liquide de la chambre (25a,25b,25c,25d) et par la pompe de déplacement (26) sous pression dans le tuyau de courant (22), le tuyau de reconduite (20) se terminant dans le tuyau de courant (22) avec un écoulement (21);
- un tuyau der conduite (25) pour le gaz à être introduit, avec lequel la chambre (25a,25b,25c,25d) est munie;
- et une valve (24) que peut être mise en marche de manière que le courant de liquide du tuyau d'alimentation (18) pour le liquide à être gazé dans le conduit d'écoulement (23) pour le mélange de gaz/liquide est réduit ou arrêté, et le mélange de gaz/liquide est conduit dans la circulation par la pompe de déplacement (26) jusqu'à ce qu'il y a un enrichissement optimal,
et la chambre (25a,25b,25c,25d) consiste d'un forage cylindrique en figuration d'un cône pointu (25e),
et au cône (25e), le commencement du tuyau de la reconduite (20) est connecté qui dans sa dimension est choisie tel que par l'augmentation de la vitesse du courant, un tourbillon se forme dans l'intérieur du forage cylindrique pour couper des bulles.

2. Le dispositif selon la revendication 1, **caractérisée en ce que** le tuyau de conduite pour le liquide à être gazé (18) et le tuyau de reconduite (20) sont arrangés pour l'opération contre-courant.

3. Le dispositif selon la revendication 1, **caractérisée en ce que** le tuyau d'alimentation pour le liquide à être gazé (18) et le tuyau de reconduite (20) sont arrangés pour l'opération courant continu.

4. Le dispositif selon une des revendication précédentes, **caractérisée en ce que** le dispositif pour l'alimentation avec du gaz (25) est un dispositif pour l'alimentation avec d ozone.

5. Le dispositif selon une des revendication précédentes, **caractérisée en ce que** l'inclination du paroi du cône est entre 10° et 80° en comparaison avec le paroi,qui est ajusté en manière verticale, de la chambre (25a,25 b,25 c,25 d).

6. Le dispositif selon une des revendication précédentes, **caractérisée en ce que** la chambre (25a, 25b, 25c, 25d) est augmentée dans son diamètre en comparaison avec le tuyau de reconduite (20) de 10 à 40%.

7. Le dispositif selon une des revendication précédentes, **caractérisée en ce qu'**il est designé pour des pressions de 0 à 15 bar.
